# EUROPÄISCHE PATENTSCHRIFT

(11) **EP 1 606 139 B1**
(45) Veröffentlichungstag und Bekanntmachung des Hinweises auf die Patenterteilung: **28.07.2010**
(21) Anmeldenummer: 04717042.8
(22) Anmeldetag: 04.03.2004
(51) Int. Cl.: B60N 2/235

(54) **FESTSTELL- UND NEIGUNGSVERSTELLVORRICHTUNG FÜR BESCHLÄGE**
DEVICE FOR BLOCKING AND ADJUSTING INCLINATION OF FITTINGS
DISPOSITIF DE BLOCAGE ET DE REGLAGE D'INCLINAISON POUR DES GARNITURES

(30) Priorität: 19.03.2003 DE 10312140
(43) Veröffentlichungstag der Anmeldung: 21.12.2005
(73) Patentinhaber: Johnson Controls GmbH, 51399 Burscheid (DE)
(72) Erfinder: KIENKE, Ingo, 42929 Wermelskirchen (DE); SCHULZ, Hans-Rudi, 42897 Remscheid (DE)
(74) Vertreter: Hemmelmann, Klaus
(86) Internationale Anmeldenummer: PCT/EP2004/002160
(87) Internationale Veröffentlichungsnummer: WO 2004/082983

(56) Entgegenhaltungen:
- US-A1- 2002 089 224
- US-A1- 2002 089 225
- US-B1- 6 209 955

## Beschreibung

Die Erfindung betrifft eine Feststell- und Neigungsverstellvorrichtung für Beschläge, insbesondere zur Verstellung der Neigung zweier an einem Fahrzeugsitz befindlicher Bauteile zueinander, wie eines Sitzteils und eines Lehnenteils, mit einem eine Rastverzahnung aufweisenden ersten Beschlagteil und einem eine Gegenrastverzahnung aufweisenden Rastglied, wobei die Rastverzahnung und die Gegenrastverzahnung mittels eines unter der Kraft einer Feder stehenden, auf das Rastglied wirkenden, über Stellmittel gegen die Kraft der Feder bewegbaren Spanngliedes in Eingriff bewegbar und in Eingriffslage arretierbar sind, wobei das Spannglied eine Verzahnung aufweist, in die eine an einem Zahnglied befindliche Gegenverzahnung eingreift, wobei die Kraft der Feder am Zahnglied angreift und über die Verzahnung und Gegenverzahnung indirekt auf das Spannglied wirkt und die Feder eine bauliche Einheit mit dem Zahnglied bildet.

### Stand der Technik

Verschiedene Neigungsverstellvorrichtungen sind aus den Dokumenten DE 198 45 698 A1, DE 195 22 854 A1 und US 4 836 608 A bekannt. Bei der Feststellvorrichtung für Verstellbeschläge an Fahrzeugsitzen gemäß der DE 198 45 698 A1, die einen eine Verzahnung aufweisenden Rastbereich und ein eine Gegenverzahnung aufweisendes Rastglied besitzen, sind die Verzahnung und die Gegenverzahnung in und außer Eingriff bewegbar und in Eingriffslage arretierbar. Der Anmeldegegenstand betrifft eine spezielle Zahngestaltung, wonach die Zahnköpfe in Eingriffslage mit ihrem Scheitel von den korrespondierenden Zahnfüßen der jeweils gegenüberliegenden Elemente einen Abstand einhalten und die korrespondierenden Verzahnungen mit den Zahnflanken aneinander anliegen. Die Zahnflanken sind über einen an deren kopfseitigem Ende beginnenden, gekrümmten Übergangsbereich mit dem Scheitel verbunden. Der am Ende der Zahnflanken liegende Verbindungsbereich zwischen Zahnflanken und Übergangsbereich ist durch Verkleinerung des Übergangsradius in Richtung auf den Zahnfuß des gegenüberliegenden Elements verschoben angeordnet. Durch diese Gestaltung soll im Crashfall eine größere Sicherheit geschaffen werden.

Der aus der DE 195 22 854 A1 bekannte Neigungsverstellbeschlag für Rückenlehnen von Kraftfahrzeugsitzen besitzt ein erstes Gelenkteil und ein zweites Gelenkteil, deren eines fest mit dem Sitz und deren anderes fest mit der Rückenlehne verbunden ist. Dabei ist das zweite Gelenkteil schwenkbar am ersten Gelenkteil angelenkt und weist eine Rastverzahnung auf, die mittels eines damit zum Eingriff ausgebildeten Verriegelungshebels in unterschiedlichen Schwenkpositionen fixierbar ist. Der Verriegelungshebel besitzt eine mit der Rastverzahnung des zweiten Gelenkteils korrespondierende Gegenverzahnung. Die beiden Verzahnungen sind mittels eines Blockierhebels in Eingriffsteilungen blockierbar. Der Blockierhebel ist am ersten Gelenkteil verschwenkbar gelagert und Verriegelungshebel und Blockierhebel besitzen zueinander komplementäre Steuerflächen. Der Blockierhebel wiederum trägt einen schwenkbar gelagerten, über ein Stellmittel verlagerbaren Arretierhebel mit einem Ansatz, der in einer ersten Verschwenkposition des Arretierhebels und bei Blockierlage des Blockierhebels an einer Anschlagfläche des ersten Gelenkteils anliegt. In einer zweiten Verschwenklage liegt der Ansatz von der Anschlagfläche des ersten Gelenkteils entfernt und erlaubt damit ein Freischwenken von Blockierhebel und Verriegelungshebel. Auch hier soll diese Gestaltung im Crashfall eine größere Sicherheit, insbesondere eine einwandfreie Blockierung der eingestellten Schwenklage schaffen.

Einen ähnlichen Aufbau wie die genannten Beschläge weist auch die Vorrichtung gemäß der US 4 836 608 A auf. Bei allen genannten Vorrichtungen wird das Spannglied, das auch als Spannocken, Einheit von Blockierhebel und Arretierhebel, "operation lever" oder Spannexzenter bezeichnet wird oder werden könnte, über eine an diesem Bauteil befestigte Zugfeder angetrieben, unter deren Wirkung das Spannglied in eine Position bewegt oder festgehalten wird, die die Eingrifflage des Rastgliedes herstellt oder sichert.

Als Stellmittel, um das Spannglied gegen die Kraft der Feder so zu bewegen, daß das Rastglied außer Eingriff gelangt, sind in der DE 195 22 854 A1 und in der DE 198 45 698 Bowdenzüge und in der US 4 836 608 A eine einstückig mit dem Spannglied ausgeführte Handhabeeinrichtung genannt bzw. dargestellt. Die GB 2 059 496 A beschreibt eine Feststell- und Neigungsverstellvorrichtung für Beschläge, die jedoch nicht nach der eingangs beschriebenen Art aufgebaut ist, für die als Stellmittel eine Übertragungsstange zur Anwendung kommt. Die Übertragungsstange greift mit ihren beiden Enden in Beschläge ein, die beidseitig eines Sitzes montiert sind.

Die bekannte Verwendung von Zugfedern zur Arretierung und Herstellung der Eingriffslage wirkt sich aufgrund der notwendigen Länge der Federn ungünstig für die Bauraumgestaltung, das sogenannte "Package", aus und kann auch aufgrund der bei einem Verdrehen in ihrer Einhängung auftretenden Reibung Geräusche bei der Betätigung erzeugen. Da die Feder bei der Betätigung verschwenkt wird, kann es wegen der sich ändernden Winkellage der Feder auch vorkommen, daß die Feder eine Kraft- Weg-Charakteristik aufweist, bei der die Stellkraft mit zunehmendem Abstand des Rastgliedes von dem Beschlagteil mit der Rastverzahnung in einem Endbereich nicht mehr - wie erwünscht - ansteigt, sondern nach Überschreiten eines Totpunktes wieder abfällt. Bei einem manuellen Stellen kann dies das Schaltgefühl der Bedienperson unerwünscht beeinflussen.

In der Druckschrift US 2002/0089225 A1, die alle Merkmale des Oberbegriffs des Anspruchs 1 offenbart, wird eine Feststellvorrichtung der eingangs beschriebenen Art offenbart. Die dort zum Antrieb des Zahnglieds verwendete, nur angedeutete Schraubenfeder ist mit einem Federschenkel offensichtlich in eine Öffnung der Beschlagplatte eingehängt. Bei der sehr ähnlichen, im Dokument US 2002/0089224 A1 beschriebenen Feststellvorrichtung ist die Welle des Zahnglieds aus dem von den Beschlagteilen eingeschlossenen Zwischenraum herausgeführt und wird dort von der Kraft einer die Welle umgebenden Schraubenfeder beaufschlagt. Beide Ausführungen sind hinsichtlich Montage und erforderlichem Bauraum unbefriedigend.

### Aufgabe

Der Erfindung liegt die Aufgabe zugrunde, eine Feststell- und Neigungsverstellvorrichtung der eingangs beschriebenen Art mit konstruktiv einfachen Mitteln derart zu verbessern, dass eine günstigere Bauraumgestaltung erzielt, eine Geräuschentwicklung gedämpft und bei der Bedienperson ein verbessertes Schaltgefühl erzeugt werden kann.

### Lösung

Diese Aufgabe wird durch eine Feststell- und Neigungsverstellvorrichtung der eingangs beschriebenen Art gelöst, bei der das Zahnglied aus einem Außenring und einem Innenring besteht, die durch die Feder gegeneinander verspannt sind, wobei die Feder konzentrisch zu dem Außenring und dem Innenring und zwischen dem Außenring und dem Innenring angeordnet ist.

Weitere vorteilhafte Ausführungen der Erfindung sind in den Unteransprüchen und der nachfolgenden speziellen Beschreibung enthalten. Anhand zweier in der beiliegenden Zeichnung dargestellter Ausführungsbeispiele wird die Erfindung näher erläutert.

Dabei zeigen:
- Fig. 1: in aufgeschnittener perspektivischer Darstellung eine erfindungsgemäße Feststell- und Neigungsverstellvorrichtung in einer ersten Ausführung,
- Fig.2: in vergrößerter Darstellung gegenüber Fig. 1, ein Spannglied und eine bauliche Einheit aus Zahnglied und Feder einer erfindungsgemäßen Feststell- und Neigungsverstellvorrichtung gemäß der ersten Ausführung der Erfindung,
- Fig. 3: in vergrößerter Darstellung gegenüber Fig. 1, ein Spannglied und eine bauliche Einheit aus Zahnglied und Feder einer erfindungsgemäßen Feststell- und Neigungsverstellvorrichtung gemäß einer zweiten Ausführung der Erfindung,
- Fig. 4: in perspektivischer Darstellung, ein Formteil, das in einer vorteilhaften Weiterbildung der Erfindung zur Anwendung kommen kann.

In den verschiedenen Figuren der Zeichnung sind gleiche Teile stets auch mit den gleichen Bezugszeichen versehen, so daß sie in der Regel auch jeweils nur einmal beschrieben werden.

Eine erfindungsgemäße Feststell- und Neigungsverstellvorrichtung für Beschläge kann insbesondere zu Verstellung der Neigung zweier an einem Fahrzeugsitz befindlicher Bauteile zueinander, wie eines Sitzteils und eines Lehnenteils, eingesetzt werden.

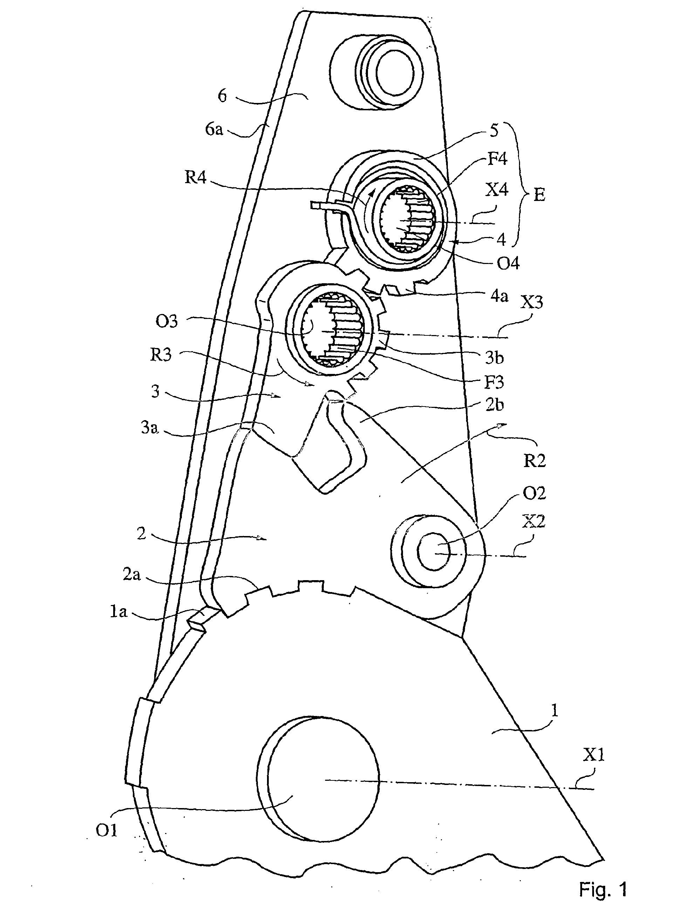

Wie Fig. 1 zeigt, umfaßt eine solche Feststell- und Neigungsverstellvorrichtung ein eine Rastverzahnung 1a aufweisendes erstes Beschlagteil 1 und ein eine Gegenrastverzahnung 2a aufweisendes nach der Art einer verschwenkbaren Klinke ausgeführtes Rastglied 2. Die Rastverzahnung 1a und die Gegenrastverzahnung 2a sind mittels eines auf das Rastglied 2 wirkenden, über Stellmittel bewegbaren Spanngliedes 3 in - und wie für den Fall dargestellt, daß dies nicht unter der Wirkung der Schwerkraft geschieht, gegebenenfalls auch außer - Eingriff bewegbar und in Eingriffslage arretierbar.

Das Spannglied 3 weist zur Bewegung des Rastgliedes 2 eine Steuerkontur 3a auf, die dem Zusammenwirken mit einer korrespondierenden Steuerkontur 2b des Rastgliedes 2 dient.

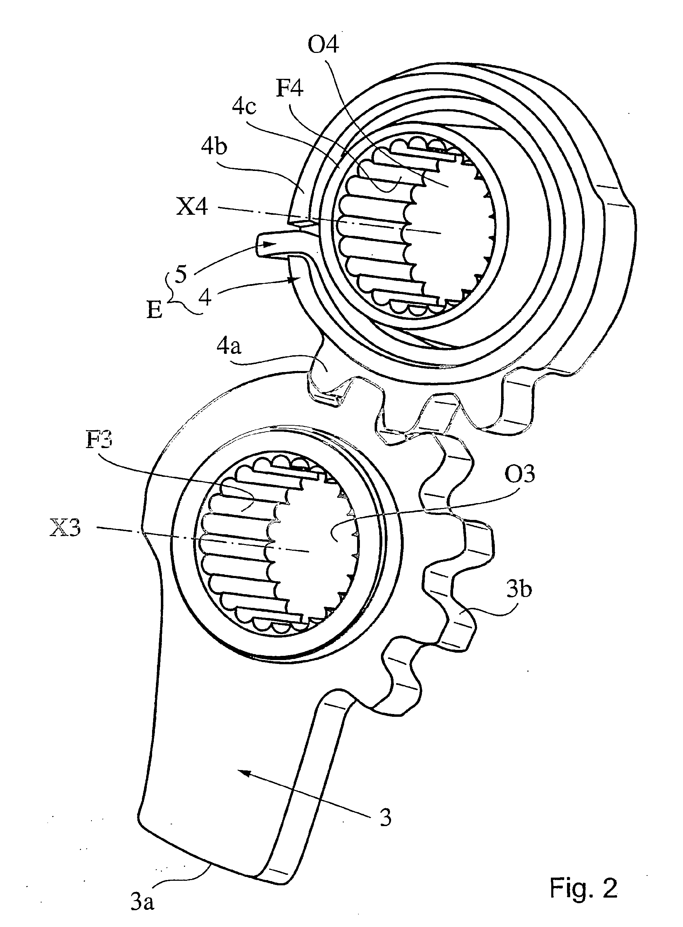

Um das Rastglied 2 in seiner Eingriffposition in die Rastverzahnung 1a des ersten Beschlagteils 1, d.h. in der in Fig. 1 dargestellten selbsthemmenden Schwenklage, auch bei dynamischen Belastungen sicher zu halten, ist das Spannglied 3 federbelastet. Zu diesem Zweck weist das Spannglied 3 eine Verzahnung 3b auf, in die eine an einem Zahnglied 4 befindliche Gegenverzahnung 4a eingreift. Das Zahnglied 4 bildet mit einer Feder 5 in montage- und bauraumtechnisch günstiger Weise eine bauliche Einheit E, die in einen ansonsten freien Bauraum im Beschlagteil verlegt werden kann. Auf diese Weise wirkt die Kraft der Feder 5 über die Gegenverzahnung 4a und Verzahnung 3b indirekt auf das Spannglied 3. Die Feder 5 ist dabei in bevorzugter Ausführung als Drehfeder, und zwar als Schenkelfeder, ausgebildet, wie dies auch Fig. 2 zeigt.

Die Verzahnung 3b des Spanngliedes 3 und die Gegenverzahnung 4a des Zahngliedes 4 sind bevorzugt als zumindest segmentartig ausgebildete Außenverzahnungen ausgeführt, wie dies in allen Figuren dargestellt ist. Das erste Beschlagteil 1, das Rastglied 2, das Spannglied 3 und das Zahnglied 4 sind um jeweilige Schwenkachsen X1, X2, X3, X4 relativ zueinander verschwenkbar. Die Schwenkachsen X1, X2, X3, X4 sind dabei insbesondere, falls nicht eine Kegelradverzahnung eingesetzt wird, parallel zueinander angeordnet. Das erste Beschlagteil 1, das Rastglied 2, das Spannglied 3 und das Zahnglied 4 weisen dabei konzentrisch um ihre jeweiligen Schwenkachsen X1, X2, X3, X4 angeordnete Befestigungsöffnungen 01, 02, 03, 04 auf, die zum Teil, insbesondere im Falle des ersten Beschlagteils 1 und des Rastglieds 2, durch entsprechende, nicht näher bezeichnete Befestigungselemente ausgefüllt sind.

Das Rastglied 2, das Spannglied 3 und das Zahnglied 4 sind an einem zweiten Beschlagteil 6 befestigt, dessen Winkellage, also Neigung, relativ zu dem ersten Beschlagteil 1 mit Hilfe der erfindungsgemäßen Feststell- und Neigungsverstellvorrichtung verändert und fixiert werden kann. Das erste Beschlagteil 1 kann beispielsweise an einem ersten Bauteil eines Fahrzeugsitzes, wie einem Sitzteil, befestigt sein und das zweite Beschlagteil 6 an einem zweiten Bauteil eines Fahrzeugsitzes, wie einem Lehnenteil, oder umgekehrt.

Was den Aufbau des zweiten Beschlagteils 6 betrifft, so ist zu beachten, daß es sich bei Fig. 1 um eine aufgeschnittene Darstellung einer erfindungsgemäße Vorrichtung handelt. Das bedeutet, daß das zweite Beschlagteil aus der abgebildeten ersten Wand 6a und einer nicht dargestellten, die übrigen Bauteile 1, 2, 3, 4, 5 abdeckenden, im wesentlichen identisch ausgeführten zweiten, mit der ersten fest verbundenen zweiten Wand besteht. In bzw. zwischen diesen Wänden sind die Bauteile 1, 2, 3, 4, 5 über die bereits erwähnten, in die Befestigungsöffnungen O1, 02, 03, 04 eingreifenden, in den Figuren nicht näher bezeichneten Befestigungselemente gehalten. Bei den ebenfalls nicht dargestellten Stellmitteln zur Bewegung des Spanngliedes 3 kann es sich bevorzugt um mindestens eine am Spannglied 3 und/oder am Zahnglied 4 angreifende, insbesondere in dessen jeweilige Befestigungsöffnung 03, 04 axial eingreifende, Übertragungsstange handeln.
Die Wirkungsweise der erfindungsgemäßen Feststell- und Neigungsverstellvorrichtung ist folgende:
In der in Fig. 1 gezeigten Darstellung liegt eine bestimmte Neigung zweier an einem Fahrzeugsitz befindlicher Bauteile, wie eines Sitzteils und eines Lehnenteils, zueinander vor. Diese Neigung drückt sich in der Winkellage des ersten Beschlagteils 1 zu dem zweiten Beschlagteil 6 aus. Durch den Eingriff der Rastverzahnung 1a des ersten Beschlagteils 1 in die Gegenrastverzahnung 2a des Rastgliedes 2 ist diese Winkellage fixiert und durch das Spannglied 3, welches unter der Kraft der Feder 5 steht, gesichert. Um die Rastverzahnung 1a des ersten Beschlagteils 1 und die Gegenrastverzahnung 2a des Rastgliedes 2 außer Eingriff zu bringen, wird gegen die Kraft der Feder 5 mit Hilfe der Stellmittel das Zahnglied 4 bewegt, und zwar in Richtung des in Fig. 1 gezeigten Pfeiles R4 gedreht. Durch den Eingriff der Gegenverzahnung 4a des Zahngliedes 4 in die Verzahnung 3b des Spanngliedes 3 kommt es infolgedessen zu einer Drehung bzw. einem Verschwenken des Spanngliedes 3 in Richtung des Pfeiles R3. Aufgrund des Zusammenwirkens der, insbesondere nasenartigen, Steuerkontur 3a des Spanngliedes 3 mit der korrespondierenden, insbesondere als Eingriffsöffnung ausgebildeten, Steuerkontur 2b des Rastgliedes 2 wird das Rastglied 2 verschwenkt und dadurch der Eingriff der Gegenrastverzahnung 2a des Rastgliedes 2 in die Rastverzahnung 1a des ersten Beschlagteils 1 aufgehoben. Die Neigung des ersten Beschlagteils 1 relativ zu dem zweiten Beschlagteil 6 kann nun durch ein Verschwenken um die Achse X1 verstellt werden. Danach wird die entgegen der Kraft der Feder 5 wirkende Stellkraft aufgehoben und das Rastglied 2 kehrt unter der Wirkung der Feder 5 mit invers zu den dargestellten Bewegungen ablaufender Dynamik in seine Eingriffsteilung zurück.
Aus Fig. 2, die - wie bereits erwähnt - ein vergrößertes Detail aus Fig. 1 zeigt, geht hervor, daß das Zahnglied 4 mit Vorteil aus einem Außenring 4b und einem Innenring 4c bestehen kann, die durch die Feder 5 gegeneinander verspannt sind. Die Feder 5 ist dabei in bauraumgünstiger Weise konzentrisch um die Achse X4 zu dem Außenring 4b und dem Innenring 4c zwischen dem Außenring 4b und dem Innenring 4c angeordnet.

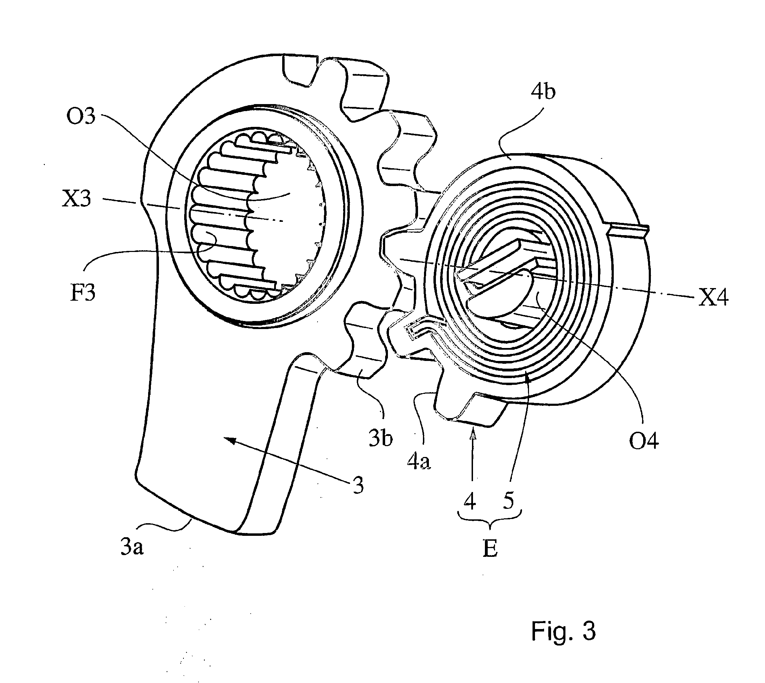

Fig. 3 zeigt eine weitere vorteilhafte Gestaltung der Feder 5 in der aus Zahnglied 4 und Feder 5 gebildeten baulichen Einheit E. Die Feder 5 ist hier als Spiralfeder, insbesondere als Flachspiralfeder, ausgebildet und ebenfalls in äußerst bauraumgünstiger, d.h. platzsparender Weise konzentrisch um die Achse X4 in der Befestigungsöffnung 04 des Zahngliedes 4 angeordnet. Sie wird dabei wie die Feder 5 in der ersten Ausführung von einem Außenring 4b umfaßt, der auf seinem Außenumfang die Gegenverzahnung 4a trägt.

Die Ausbildung nach Fig. 1 und 2 ist gegenüber der Ausführung nach Fig. 3 zwar aufwendiger zu fertigen, weist in Abhängigkeit von der Sitzgeometrie jedoch den Vorteil auf, dass die in der Befestigungsöffnung 04 montierbare Übertragungsstange nach hinten und damit außerhalb des Komfortbereichs des Sitzes angeordnet ist. Sofern die Sitzgeometrie dieses zuläßt, wird aus Kostengründen vorzugsweise die Ausführung nach Fig. 3 eingesetzt. Selbstverständlich können Formgebung, Dimensionierung und Lage der baulichen Einheit E sowie ihrer Bestandteile Zahnglied 4 und Feder 5 von den dargestellten Ausführungen abweichen. Als Stellmittel können alternativ zu den als bevorzugt genannten Befestigungsstangen auch andere, wie z.B. die bereits erwähnten Bowdenzüge, zum Einsatz kommen.

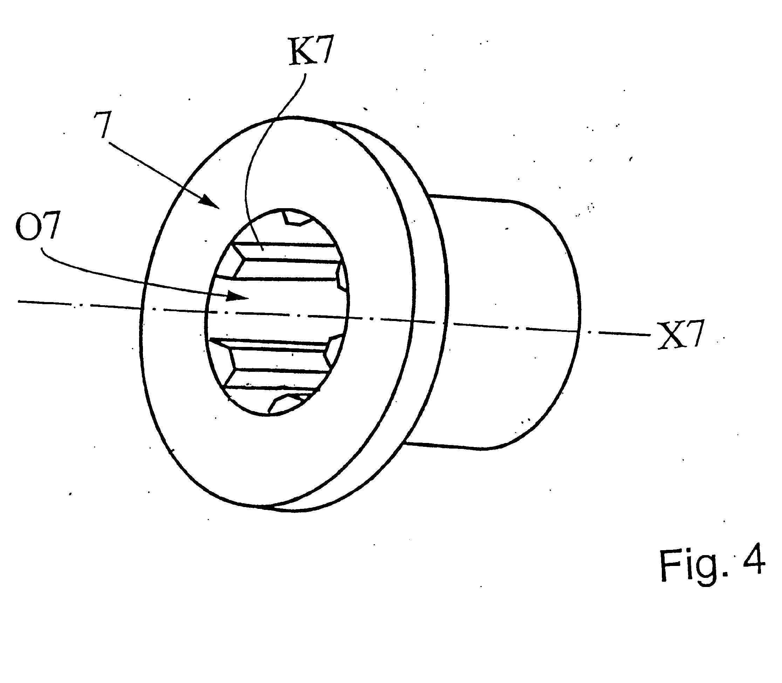

Außerdem kann - wie ebenfalls zeichnerisch in den Fig. 1 bis 3 dargestellt - in den Befestigungsöffnungen 03, 04 von Spannglied 3 und/oder Zahnglied 4 randseitig jeweils eine Feinverzahnung F3, F4 vorgesehen sein, in die ein Formprofilteil 7 (Fig. 4) zur Aufnahme eines Endes einer Übertragungsstange, die als Stellmittel eingesetzt wird, um das erste Beschlagteil 1 und das Rastglied 2 außer Eingriff zu bringen, koaxial (X2 und/oder X3 mit X7) eingepresst wird. Das buchsenartige Formprofilteil 7 kann dabei in seiner Befestigungsöffnung 07 eine profilierte Innenkontur K7 aufweisen, die beim Einpressen derart positioniert werden kann, daß das Formprofilteil 7 in Bezug auf das zweite Beschlagteil 6 in einer definierten Stellung angeordnet ist. Diese definierte Stellung kann z.B. durch den Abstand eines markanten Punktes der Innenkontur K7 zu einem oder mehreren Bezugspunkten des zweiten Beschlagteils 6, wie den Durchdringungspunkten der Achsen X2, X3 des Rastgliedes 2 oder des Spanngliedes 3, bestehen. Auf diese Weise wird erreicht, daß zwei an den beiden Seiten eines Sitzteils zu montierende erfindungsgemäße Vorrichtungen schon sehr früh, d.h. bei der Montage, synchronisiert werden können und nicht später in einer höheren Baugruppe aufeinander abgestimmt werden müssen. Unterschiedliche Positionen des Spanngliedes 2, die durch Toleranzen auftreten, werden dadurch ausgeglichen und die Übertragungsstange kann verspannungsfrei montiert werden. Die Position des Formprofilteils 7 kann unabhängig von der Teilung der Innenkontur K7, z.B. einer Verzahnung von Spannglied 3 und/oder Rastglied 4, stufenlos jede gewünschte Position einnehmen.

### Bezugszeichen

- 1: erstes Beschlagteil
- 1a: Rastverzahnung von 1
- 2: Rastglied
- 2a: Gegenrastverzahnung von 2 zu 1 a
- 2b: Steuerkontur von 2
- 3: Spannglied
- 3a: Steuerkontur von 3, korrespondierend zu 2b
- 3b: Verzahnung von 3
- 4: Zahnglied
- 4a: Gegenverzahnung von 2 zu 3b
- 4b: Außenring von 4
- 4c: Innenring von 4
- 5: Feder
- 6: zweites Beschlagteil
- 6a: Wand von 6
- 7: Formprofilteil
- E: Baueinheit aus 4 und 5
- F3: Feinverzahnung in 03
- F4: Feinverzahnung in 04
- K7: Kontur (Verzahnung) in 07
- 01: Befestigungsöffnung von 1
- 02: Befestigungsöffnung von 2
- 03: Befestigungsöffnung von 3
- 04: Befestigungsöffnung von 4
- 07: Befestigungsöffnung von 7
- R2: Richtungspfeil Verschwenk-/Drehbewegung von 2
- R3: Richtungspfeil Verschwenk-/Drehbewegung von 3
- R4: Richtungspfeil Verschwenk-/Drehbewegung von 4
- X1: Schwenkachse von 1
- X2: Schwenkachse von 2
- X3: Schwenkachse von 3
- X4: Schwenkachse von 4
- X7: Achse von 7

## Patentansprüche

1. Feststell- und Neigungsverstellvorrichtung für Beschläge, insbesondere zur Verstellung der Neigung zweier an einem Fahrzeugsitz befindlicher Bauteile zueinander, wie eines Sitzteils und eines Lehnenteils, mit einem eine Rastverzahnung (1a) aufweisenden ersten Beschlagteil (1) und einem eine Gegenrastverzahnung (2a) aufweisenden Rastglied (2), wobei die Rastverzahnung (1a) und die Gegenrastverzahnung (2a) mittels eines unter der Kraft einer Feder (5) stehenden, auf das Rastglied (2) wirkenden, über Stellmittel gegen die Kraft der Feder (5) bewegbaren Spanngliedes (3) in Eingriff bewegbar und in Eingriffslage arretierbar sind, wobei das Spannglied (3) eine Verzahnung (3b) aufweist, in die eine an einem Zahnglied (4) befindliche Gegenverzahnung (4a) eingreift, wobei die Kraft der Feder (5) am Zahnglied (4) angreift und über die Verzahnung (3b) und Gegenverzahnung (4a) indirekt auf das Spannglied (3) wirkt und die Feder (5) eine bauliche Einheit (E) mit dem Zahnglied (4) bildet, **dadurch gekennzeichnet, dass** das Zahnglied (4) aus einem Außenring (4b) und einem Innenring (4c) besteht, die durch die Feder (5) gegeneinander verspannt sind, wobei die Feder (5) konzentrisch zu dem Außenring (4b) und dem Innenring (4c) und zwischen dem Außenring (4b) und dem Innenring (4c) angeordnet ist.

2. Vorrichtung nach Anspruch 1, **dadurch gekennzeichnet, dass** das erste Beschlagteil (1), das Rastglied (2), das Spannglied (3) und das Zahnglied (4) um jeweilige, bevorzugt parallel zueinander angeordnete, Schwenkachsen (X1, X2, X3, X4) relativ zueinander verschwenkbar sind.

3. Vorrichtung nach einem der Ansprüche 1 oder 2, **dadurch gekennzeichnet, dass** die Feder (5) als Drehfeder ausgebildet ist.

4. Vorrichtung nach einem der Ansprüche 1 bis 3, **dadurch gekennzeichnet, dass** die Feder (5) als Schenkelfeder ausgebildet ist.

5. Vorrichtung nach einem der Ansprüche 1 bis 3, **dadurch gekennzeichnet, dass** die Feder (5) als Spiralfeder, insbesondere als Flachspiralfeder, ausgebildet ist.

6. Vorrichtung nach einem der Ansprüche 1 bis 5, **dadurch gekennzeichnet, dass** das Spannglied (3) zur Bewegung des Rastgliedes (2) eine Steuerkontur (3a) zum Zusammenwirken mit einer korrespondierenden Steuerkontur (2b) des Rastgliedes (2) aufweist.

7. Vorrichtung nach einem der Ansprüche 1 bis 6, **dadurch gekennzeichnet, dass** das erste Beschlagteil (1), das Rastglied (2), das Spannglied (3) und/oder das Zahnglied (4) insbesondere konzentrisch um ihre jeweiligen Schwenkachsen (X1, X2, X3, X4) angeordnete Befestigungsöffnungen (O1, 02, 03, 04) aufweisen.

8. Vorrichtung nach einem der Ansprüche 1 bis 7, **dadurch gekennzeichnet, dass** die Verzahnung (3b) des Spanngliedes (3) und die Gegenverzahnung (4a) des Zahngliedes (4) zumindest segmentartig ausgebildete Außenverzahnungen sind.

9. Vorrichtung nach einem der Ansprüche 1 bis 8, **dadurch gekennzeichnet, dass** das Rastglied (2), das Spannglied (3) und das Zahnglied (4) an einem zweiten Beschlagteil (6) befestigt sind.

10. Vorrichtung nach einem der Ansprüche 1 bis 9, **dadurch gekennzeichnet, dass** die Stellmittel zur Bewegung des Spanngliedes (3) aus mindestens einer am Spannglied (3) und/oder am Zahnglied (4) angreifenden, insbesondere in dessen jeweilige Befestigungsöffnung (03, 04) axial eingreifenden, Übertragungsstange gebildet sind.

11. Vorrichtung nach einem der Ansprüche 1 bis 10, **dadurch gekennzeichnet, dass** die Feder (5) eine ansteigende, insbesondere eine linear ansteigende, Kraft-Weg-Charakteristik aufweist.

12. Vorrichtung nach einem der Ansprüche 8 bis 11, **dadurch gekennzeichnet, dass** in den Befestigungsöffnungen (03, 04) von Spannglied (3) und/oder Zahnglied (4) randseitig jeweils eine Feinverzahnung (F3, F4) vorgesehen ist.

13. Vorrichtung nach einem der Ansprüche 1 bis 12, **gekennzeichnet durch** ein in das Spannglied (3) und/oder Zahnglied (4) einsetzbares, insbesondere in die Befestigungsöffnungen (03, 04) von Spannglied (3) und/oder Zahnglied (4) einpreßbares Formteil (7) zur Aufnahme eines Endes einer als Stellmittel eingesetzten Übertragungsstange, wobei das Formteil (7) buchsenartig ausgebildet ist und in seiner Befestigungsöffnung (07) eine profilierte Innenkontur (K7) aufweist.

## Claims

1. Device for blocking and adjusting the inclination of fittings, in particular for adjusting the inclination with respect to each other of two components situated on a vehicle seat, such as a seat part and a backrest part, having a first fitting part (1) which has a latching toothing (1a), and a latching element (2) which has a mating latching toothing (2a), the latching toothing (1a) and the mating latching toothing (2a) being able to be brought into engagement and being able to be arrested in the engagement position by means of a clamping element (3) which is under the force of a spring (5), acts on the latching element (2) and is movable counter to the force of the spring (5) via adjusting means, the clamping element (3) having a toothing (3b) in which a mating toothing (4a) situated on a toothed element (4) engages, the force of the spring (5) acting on the toothed element (4) and acting indirectly on the clamping element (3) via the toothing (3b) and mating toothing (4a), and the spring (5) forming a constructional unit (E) with the toothed element (4), **characterized in that** the toothed element (4) is composed of an outer ring (4b) and an inner ring (4c) which are braced against each other by the spring (5) spring (5) being arranged concentrically with the outer ring (4b) and the inner ring (4c) and between the outer ring (4b) and the inner ring (4c).

2. Device according to Claim 1, **characterized in that** the first fitting part (1), the latching element (2), the clamping element (3) and the toothed element (4) can be pivoted relative to one another about respective pivot axes (X1, X2, X3, X4) preferably arranged parallel to one another.

3. Device according to either of Claims 1 and 2, **characterized in that** the spring (5) is designed as a torsion spring.

4. Device according to one of Claims 1 to 3, **characterized in that** the spring (5) is designed as a leg spring.

5. Device according to one of Claims 1 to 3, **characterized in that** the spring (5) is designed as a spiral spring, in particular as a flat spiral spring.

6. Device according to one of Claims 1 to 5, **characterized in that** the clamping element (3) has, for moving the latching element (2), a control contour (3a) for interacting with a corresponding control contour (2b) of the latching element (2) .

7. Device according to one of Claims 1 to 6, **characterized in that** the first fitting part (1), the latching element (2), the clamping element (3) and/or the toothed element (4) have fastening openings (O1, 02, 03, 04) arranged in particular concentrically about their respective pivot axes (X1, X2, X3, X4).

8. Device according to one of Claims 1 to 7, **characterized in that** the toothing (3b) of the clamping element (3) and the mating toothing (4a) of the toothed element (4) are external toothings designed at least in the manner of segments.

9. Device according to one of Claims 1 to 8, **characterized in that** the latching element (2), the clamping element (3) and the toothed element (4) are fastened to a second fitting part (6).

10. Device according to one of Claims 1 to 9, **characterized in that** the adjusting means for moving the clamping element (3) are formed from at least one transmission rod which acts on the clamping element (3) and/or on the toothed element (4) and in particular engages axially in the respective fastening opening (03, 04) thereof.

11. Device according to one of Claims 1 to 10, **characterize in that** the spring (5) has a rising, in particular a linearly rising, force/travel characteristic.

12. Device according to one of Claims 8 to 11, **characterized in that** a respective fine toothing (F3, F4) is provided around the periphery of the fastening openings (03, 04) of clamping element (3) and/or toothed element (4).

13. Device according to one of Claims 1 to 12, **characterized by** a moulded part (7) which can be inserted into the clamping element (3) and/or toothed element (4), in particular can be pressed into the fastening openings (03, 04) of clamping element (3) and/or toothed element (4) and is intended for receiving one end of a transmission rod used as the adjusting means, the moulded part (7) being of bushing-like design and having a profiled inner contour (K7) in its fastening opening (07).

## Revendications

1. Dispositif de fixation et de réglage d'inclinaison de garnitures, notamment pour le réglage de l'inclinaison de deux composants se trouvant sur un siège de véhicule l'un par rapport à l'autre, comme d'une partie de siège et d'une partie de dossier, comprenant une première partie de garniture (1) présentant une denture d'encliquetage (1a) et un organe d'encliquetage (2) présentant une denture d'encliquetage conjuguée (2a), la denture d'encliquetage (1a) et la denture d'encliquetage conjuguée (2a) pouvant être amenées en prise et bloquées dans la position d'engagement au moyen d'un organe de serrage (3) soumis à la force d'un ressort (5), agissant sur l'organe d'encliquetage (2) déplaçable par le biais de moyens de réglage à l'encontre de la force du ressort (5), l'organe de serrage (3) présentant une denture (3b), dans laquelle vient en prise une denture conjuguée (4a) se trouvant sur un organe denté (4), la force du ressort (5) s'exerçant sur l'organe denté (4) et agissant par le biais de la denture (3b) et de la denture conjuguée (4a) de manière indirecte sur l'organe de serrage (3), et le ressort (5) formant une unité constructive (E) avec l'organe denté (4), **caractérisé en ce que** l'organe denté (4) se compose d'une bague extérieure (4b) et d'une bague intérieure (4c), qui sont serrées l'une contre l'autre par le ressort (5), le ressort (5) étant disposé concentriquement à la bague extérieure (4b) et à la bague intérieure (4c) et étant disposé entre la bague extérieure (4b) et la bague intérieure (4c).

2. Dispositif selon la revendication 1, **caractérisé en ce que** la première partie de garniture (1), l'organe d'encliquetage (2), l'organe de serrage (3) et l'organe denté (4) peuvent pivoter les uns par rapport aux autres autour d'axes de pivotement respectifs, de préférence disposés parallèlement les uns aux autres (X1, X2, X3, X4).

3. Dispositif selon l'une quelconque des revendications 1 ou 2, **caractérisé en ce que** le ressort (5) est réalisé sous forme de ressort de torsion.

4. Dispositif selon l'une quelconque des revendications 1 à 3, **caractérisé en ce que** le ressort (5) est réalisé sous forme de ressort à branches.

5. Dispositif selon l'une quelconque des revendications 1 à 3, **caractérisé en ce que** le ressort (5) est réalisé sous forme de ressort spiral, notamment sous forme de ressort spiral plat.

6. Dispositif selon l'une quelconque des revendications 1 à 5, **caractérisé en ce que** l'organe de serrage (3) présente, pour le déplacement de l'organe d'encliquetage (2), un contour de commande (3a) pour coopérer avec un contour de commande (2b) correspondant de l'organe d'encliquetage (2).

7. Dispositif selon l'une quelconque des revendications 1 à 6, **caractérisé en ce que** la première partie de garniture (1), l'organe d'encliquetage (2), l'organe de serrage (3) et/ou l'organe denté (4) présentent des ouvertures de fixation (01, 02, 03, 04) disposées notamment concentriquement autour de leurs axes de pivotement respectifs (X1, X2, X3, X4).

8. Dispositif selon l'une quelconque des revendications 1 à 7, **caractérisé en ce que** la denture (3b) de l'organe de serrage (3) et la denture conjuguée (4a) de l'organe denté (4) sont des dentures extérieures réalisées au moins sous forme segmentée.

9. Dispositif selon l'une quelconque des revendications 1 à 8, **caractérisé en ce que** l'organe d'encliquetage (2), l'organe de serrage (3) et l'organe denté (4) sont fixés sur une deuxième partie de garniture (6).

10. Dispositif selon l'une quelconque des revendications 1 à 9, **caractérisé en ce que** les moyens de réglage pour le déplacement de l'organe de serrage (3) sont formés d'au moins une tige de transfert venant en prise axialement sur l'organe de serrage (3) et/ou sur l'organe denté (4), notamment dans leur ouverture de fixation respective (03, 04).

11. Dispositif selon l'une quelconque des revendications 1 à 10, **caractérisé en ce que** le ressort (5) présente une caractéristique force-course ascendante, notamment ascendante linéaire.

12. Dispositif selon l'une quelconque des revendications 8 à 11, **caractérisé en ce que** l'on prévoit dans les ouvertures de fixation (03, 04) de l'organe de serrage (3) et/ou de l'organe denté (4) une denture fine respective (F3, F4) du côté du bord.

13. Dispositif selon l'une quelconque des revendications 1 à 12, **caractérisé par** une pièce moulée (7) pouvant être insérée dans l'organe de serrage (3) et/ou l'organe denté (4), notamment pouvant être pressée dans les ouvertures de fixation (03, 04) de l'organe de serrage (3) et/ou de l'organe denté (4), pour recevoir une extrémité d'une tige de transfert utilisée comme moyen de réglage, la pièce moulée (7) étant réalisée en forme de douille et présentant dans son ouverture de fixation (07) un contour interne profilé (K7).
